Europäisches Patentamt

European Patent Office

Office européen des brevets

(11) Publication number: **0 089 320**
**B1**

# EUROPEAN PATENT SPECIFICATION

(45) Date of publication of patent specification: **23.07.86**

(51) Int. Cl.⁴: **B 60 C 11/00**

(21) Application number: **83830049.9**

(22) Date of filing: **08.03.83**

(54) **Tread provided with a block groove pattern, particularly for retreading tires.**

(30) Priority: **17.03.82 IT 2117682 u**

(43) Date of publication of application:
**21.09.83 Bulletin 83/38**

(45) Publication of the grant of the patent:
**23.07.86 Bulletin 86/30**

(84) Designated Contracting States:
**AT BE CH DE FR GB LI LU NL SE**

(56) References cited:
**DE-B-1 232 845**
**FR-A-1 574 733**
**FR-A-2 115 233**
**FR-A-2 255 191**
**FR-A-2 446 195**
**US-A-3 970 131**

**GUMMIBEREIFUNG, no. 5, 1978, page 30,
Bielefeld, DE. "Vakuum Vulk Kalterneuerung"**

**PATENTS ABSTRACTS OF JAPAN, vol. 7, no.
79(M-204)(1224), 31st March 1983**

(73) Proprietor: **MARANGONI PNEUMATICI S.p.A.
Via del Garda, 6
I-38068 Rovereto (Trento) (IT)**

(72) Inventor: **Marangoni, Giovanni
Viale dei Colli, 14
I-38068 Rovereto (Trento) (IT)**

(74) Representative: **Cicogna, Franco
Ufficio Internazionale Brevetti Dott.Prof. Franco
Cicogna Via Visconti di Modrone, 14/A
I-20122 Milano (IT)**

Courier Press, Leamington Spa, England.

## Description

The present invention relates to a block grooved tread, particularly for retreading tires.

As it is known, the worn tires may be advantageously reused, by applying on the carcass thereof new rubber or the like material tread rings.

The known retreaded tires are however affected by some drawbacks, since the applied new tread rings are not in general accurately designed depending on the running conditions of the motor vehicle: accordingly they are generally of poor performance.

The task of the present invention is that of solving the thereinabove mentioned problem, by providing such a block grooved tread which is specifically designed for retreading pneumatic tires, and effective to provide the retreaded tires with great reliability and safety characteristics.

Within that task, it is a main object of the present invention to provide such a tread which is accurately designed depending on the vehicle running conditions and which, while being specifically designed for retreaded pneumatic tires, is also suitable for being used on new tires.

Yet another object of the present invention is to provide such a tread the groove pattern whereof is effective to make the retreaded tire particularly suitable for winter use, while having satisfactory bending characteristics, in such a way as to provide good performances also in the other seasons.

Yet another object of the present invention is to provide such a tread effective to well adhere to ground, in any conditions of the latter.

Yet another object of the invention is to provide such a tread therein the component elements are so arranged as to perfectly fit the running conditions of the vehicle.

According to the present invention the thereinabove task and objects are achieved by a tread, particularly for retreading tires, comprising a groove pattern consisting of side blocks, forming a single body with the tire shoulder and central blocks which blocks are respectively arranged according to a central circumferential line and two side circumferential lines, characterized in that said side blocks are alternatively spaced from the tire shoulder by spur-shaped voids.

A tread according to the preamble of claim 1 is known from FR—A—1574733.

Further characteristics and advantages of the tread according to the present invention will become more apparent hereinafter from the following detailed description of a preferred embodiment thereof, being illustrated, by way of an example, in the accompanying drawing, where:

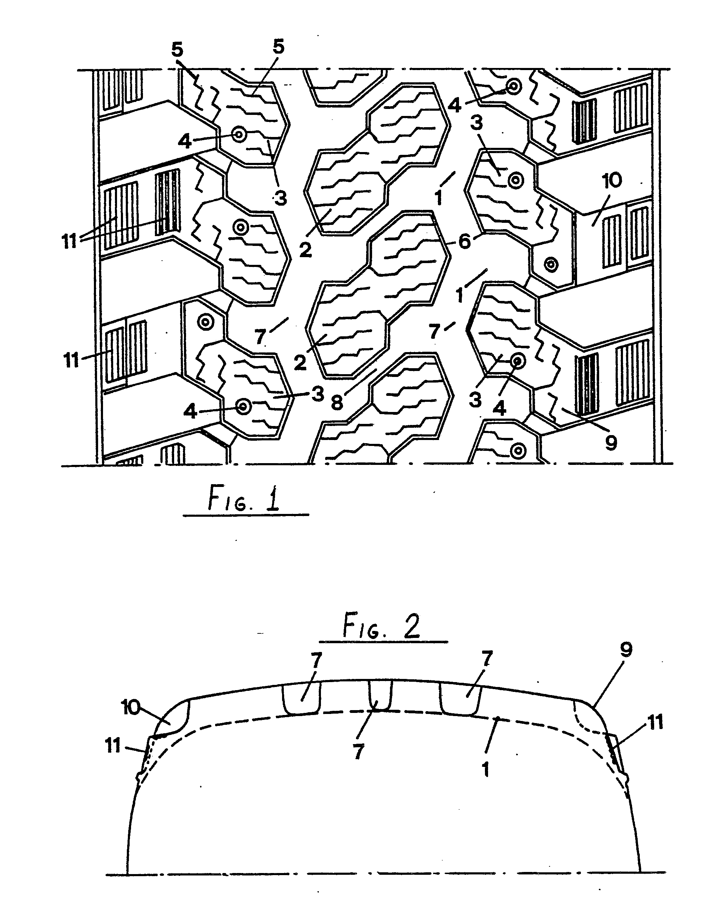

Fig. 1 is a top view illustrating a portion of the tread according to the present invention; and

Fig. 2 is a transversal cross-sectional view of that same tread.

With reference to the accompanying drawing, the tread, particularly for retreading tires, according to the present invention, comprises a base band 1, thereon there are formed central blocks 2 and side blocks 3, which are respectively arranged according to the central circumferential line and the two side circumferential lines.

More specifically, said blocks 2 and 3 have advantageously a substantially rhomboidal shape and are provided with rised contour edges 6 effective to improve the finishing of the tread itself.

Said blocks 2 and 3 are moreover each provided with notches 5 of substantially zig-zag arrangement, extending up to 80% of the recess depth, thereby providing an improved flexibility of said blocks, during the running, which greatly enhances the ground adhesion characteristics, as well as the driving and water ejecting characteristics of the tire.

The central blocks 2 which, as thereinabove mentioned, have a substantially rhomboidal shape, are slanted by approximately 40° with respect to the tire advancing axis, while the side blocks 3 are slanted by substantially 30° in the opposite direction.

In particular, said central blocks 2 are progressively arranged on the center of the tread, over the complete circumference thereof, being adjoined by the side blocks 3, oppositely slanted, which latter end at the tread shoulder.

On said side blocks 3 recesses or seats 4 are formed effective to allow for steel nails to be inserted into said blocks, as it is necessary.

The circumferential arrangement of the central blocks 2 and side blocks 3 defines longitudinal recesses 7, circumferentially extending, as well as transversal recesses 8 which practically join the two longitudinal recesses 7.

The particular configuration of said recesses 7 and 8 is effective to prevent said blocks from contacting one another because of the deformation they are subjected to during the running, and improves the ground adhesion characteristics of the tire.

Moreover the mentioned side blocks 3, which are arranged on the two circumferential side lines, are effective to alternatively form a single body with the shoulder 9, and define spur-shaped voids 10.

Said spur-shaped voids 10 are provided with a knurled bearing surface 11, effective to prevent the tire from sinking in the snow and mud and effectively acting as a gripping surface during the running.

Said knurled surface, moreover, acts to disperse the heat produced during the running.

The pitch of the tread is varied according to predetermined spacings, in such a way as to prevent annoying resonances from occurring during the running.

From the above disclosure it should be noted that, with the illustrated tread, it is possible to obtain high performances, even in retreaded tires, owing to the great functionality and use safety which are characteristic of the subject tread.

In practicing the invention the used materials, as well as the contingent shapes and size, may be any according to the requirements.

## Claims

1. A tread, particularly for retreading tires, comprising a groove pattern consisting of side blocks (3), forming a single body with the tire shoulder (9) and central blocks (2), which blocks (2, 3) are respectively arranged according to a central circumferential line and two side circumferential lines, characterized in that said side blocks (3) are alternatively spaced from the tire shoulder (9) by spur-shaped voids (10).

2. A tread, particularly for retreading tires, according to the preceding claim, characterized in that said central (2) and side (3) blocks are of substantially rhomboidal shape.

3. A tread, particularly for retreading tires, according to the preceding claims, characterized in that it comprises a base band (1), thereon there are formed said central (2) and side (3) blocks.

4. A tread, particularly for retreading tires, according to one or more of the preceding claims, characterized in that said central blocks (2) are slanted by substantially 40° with respect to the tire advancing axis, whereas said side blocks (3) are slanted by substantially 30° in the opposite direction.

5. A tread, particularly for retreading tires, according to one or more of the preceding claims, characterized in that each said block (2, 3) is provided with rised contour edges (6). .

6. A tread, particularly for retreading tires, according to one or more of the preceding claims, characterized in that on each said block (2, 3) there are formed substantially zig-zag notches (5), effective to improve the bending characteristics of said blocks.

7. A tread, particularly for retreading tires, according to one or more of the preceding claims, characterized in that it comprises, on said side blocks (3), a plurality of recesses effective to receive corresponding steel nails.

8. A tread, particularly for retreading tires, according to one or more of the preceding claims, characterized in that said voids (10) are provided with a knurled bearing surface (11).

9. A tread, particularly for retreading tires, according to one or more of the preceding claims, characterized in that said central blocks (2) and side blocks (3) are arranged in such a way as to define longitudinal recesses (7), circumferentially extending on said tread and joined by transversal recesses (8) or notches, said recesses (7, 8) being effective to prevent said blocks (2, 3) from contacting one another as they are deformed during the running.

## Patentansprüche

1. Lauffläche, insbesondere zum Runderneuern von Luftrefine, mit einem Laufdeckenmuster, das aus einen einzigen Körper mit der Schulter (9) des Luftreifens bildenden Seitenblöcken (3) und aus Zentralblöcken (2) besteht, welche Blöcke (2, 3) jeweils einer umlaufenden Zentrallinie und zwei umlaufenden Seitenlinien entsprechend angeordnet sind, dadurch gekennzeichnet, daß die Seitenblöcke (3) abwechselnd von der Schulter (9) des Luftreifens weg durch spornförmige Lücken im Abstand gehalten sind.

2. Lauffläche, insbesondere zum Runderneuern von Luftreifen, nach dem vorhergehenden Anspruch, dadurch gekennzeichnet, daß die Zentral- und Seitenblöcke (2, 3) im wesentlichen rhomboidförmig sind.

3. Lauffläche, insbesondere zum Runderneuern von Luftreifen, nach den vorhergehenden Ansprüchen, dadurch gekennzeichnet, daß sie ein Grundband (1) aufweist, auf welchem die Zentral- und die Seitenblöcke (2, 3) gebildet sind.

4. Lauffläche, insbesondere zum Runderneuern von Luftreifen, nach einem oder mehreren der vorhergehenden Ansprüche, dadurch gekennzeichnet, daß die Zentralblökke (2) um im wesentlichen 40° zur Vorwärtslaufaxis des Luftreifens geneigt sind, wogegen die Seitenblöcke (3) um im wesentlichen 30° in der entgegengesetzten Richtung geneigt sind.

5. Lauffläche, insbesondere zum Runderneuern von Luftreifen nach einem oder mehreren der vorhergehenden Ansprüche, dadurch gekennzeichnet, daß jeder Block (2, 3) mit vorspringenden Profilkanten versehen ist.

6. Lauffläche, insbesondere zum Runderneuern von Luftreifen nach einem oder mehreren der vorhergehenden Ansprüche, dadurch gekennzeichnet, daß in jedem Block (2, 3) im wesentlichen zig-zagförmige Einschnitte (5) ausgebildet sind, die befähigt sind, die Biegungseigenschaften der Blöcke zu verbessern.

7. Lauffläche, insbesondere zum Runderneuern von Luftreifen nach einem oder mehreren der vorhergehenden Ansprüche, dadurch gekennzeichnet, daß sie an den Seitenblöcken (3) eine Vielzahl von Aussparungen aufweist, die befähigt sind, entsprechende Stahlnageln aufzunehmen.

8. Lauffläche, insbesondere zum Runderneuern von Luftreifen nach einem oder mehreren der vorhergehenden Ansprüche, dadurch gekennzeichnet, daß die Lücken (10) mit einer gerändelten Auflagefläche (11) versehen sind.

9. Lauffläche, insbesondere zum Runderneuern von Luftreifen nach einem oder mehreren der vorhergehenden Ansprüche, dadurch gekennzeichnet, daß die Zentralblöcke (2) und die Seitenblöcke (3) derart angeordnet sind, daß sie Längsaussparungen (7) bilden, welche sich umlaufend auf die Lauffläche erstrecken und durch Queraussparungen (8) bzw. Einschnitte verbunden sind, wobei die Aussparungen (7, 8) befähigt sind, eine gegenseitige Berührung der Blöcke (2, 3) zu verhindern, wenn diese bei der Fahrt verformt werden.

## Revendications

1. Bande de roulement, particulièrement pour le rechapage de la bande de roulement de pneux, comprenant une configuration de gorges formée par des petits blocs lateraux (3) formant un corps singulier avec l'épaulement du pneu (9) et des petits blocs centraux (2), les petits blocs (2, 3) étant respectivement disposés selon une ligne circonférentielle centrale et deux lignes circonférentielles laterales, caractérisée en ce que lesdits petits blocs lateraux (3) sont distancés d'une manière alternative de l'épaulement du pneu (9) par des vides façonnés à éperon.

2. Bande de roulement, particulièrement pour le rechapage de la bande de roulement de pneux, selon la revendication précédente, caractérisée en ce que lesdits petits blocs centraux (2) et lateraux (3) ont une forme sensiblement à rhombe.

3. Bande de roulement, particulièrement pour le rechapage de la bande de roulement de pneux, selon les revendications précédentes, caractérisée en ce que ladite bande comprend une bande de base sur laquelle on a formé lesdits petits blocs centraux (2) et lateraux (3).

4. Bande de roulement, particulièrement pour le rechapage de la bande de roulement de pneux, selon l'une ou plusieurs des revendications précédentes, caractérisée en ce que lesdits petits blocs centraux (2) sont inclinés de sensiblement 40° par rapport à l'axe d'avancement du pneu, tandis que lesdits petits blocs lateraux (3) sont inclinés de sensiblement 30° dans la direction opposée.

5. Bande de roulement, particulièrement pour la rechapage de la bande de roulement de pneux, selon l'une ou plusieures des revendications précédentes, caractérisée en ce que chaque dit petit bloc (2, 3) est pourvu de bords de profil saillant (6).

6. Bande de roulement, particulièrement pour le rechapage de la bande de roulement de pneux, selon l'une ou plusieures des revendications précédentes, caractérisée en ce que sur chaque petit bloc (2, 3) on a formé des entailles sensiblement à zig-zag aptes à améliorer les caractéristiques de flexion desdits petits blocs.

7. Bande de roulement, particulièrement pour le rechapage de la bande de roulement de pneux, selon l'une ou plusieures des revendications précédentes, caractérisée en ce que ladite bande comprend, sur lesdits petits blocs lateraux (3) une pluralité de portions rentrantes aptes a recevoir des clous d'acier correspondant.

8. Bande de roulement, particulièrement pour le rechapage de la bande de roulement de pneux, selon l'une ou plusieures des revendications précédentes, caractérisée en ce que lesdits vides (10) sont pourvus d'une surface d'appui taraudée.

9. Bande de roulement, particulièrement pour le rechapage de la bande de roulement de pneux, selon l'une ou plusieures des revendications précédentes, caractérisée en ce que lesdits petits blocs centraux (2) et lesdits petits blocs lateraux (3) sont disposés de manière à définir des portions rentrantes longitudinales (7) s'étendant circumférentiellement sur ladite bande de roulement et reliées au moyen des portions rentrantes transversales ou entailles (8), lesdites portions rentrantes (7, 8) étant aptes à empêcher lesdits petits blocs (2, 3) de se contacter lorsqu'ils sont déformés pendant la marche.

F<sub>IG</sub>. 1

F<sub>IG</sub>. 2

1